Europäisches Patentamt

European Patent Office

Office européen des brevets

(11) Veröffentlichungsnummer: **0 554 286 B1**

# EUROPÄISCHE PATENTSCHRIFT

(45) Veröffentlichungstag der Patentschrift: **31.05.95**

(51) Int. Cl.6: **B29C 47/16**, B29C 47/22

(21) Anmeldenummer: **91918038.0**

(22) Anmeldetag: **16.10.91**

(86) Internationale Anmeldenummer:
**PCT/EP91/01969**

(87) Internationale Veröffentlichungsnummer:
**WO 92/07701 (14.05.92 92/11)**

(54) **VERFAHREN ZUR HERSTELLUNG VON FLÄCHEN- UND IM QUERSCHNITT RINGFÖRMIGEN EXTRUDATEN SOWIE VORRICHTUNG ZUR DURCHFÜHRUNG DES VERFAHRENS.**

(30) Priorität: **25.10.90 DE 4033974**

(43) Veröffentlichungstag der Anmeldung:
**11.08.93 Patentblatt 93/32**

(45) Bekanntmachung des Hinweises auf die
Patenterteilung:
**31.05.95 Patentblatt 95/22**

(84) Benannte Vertragsstaaten:
**BE CH DE FR GB IT LI**

(56) Entgegenhaltungen:
**EP-A- 0 203 479     EP-A- 0 329 157**
**EP-A- 0 357 071     DE-C- 3 107 701**
**US-A- 4 124 342     US-A- 4 711 747**

(73) Patentinhaber: **Brückner Maschinenbau Gernot Brückner GmbH & Co. KG**
**Königsberger Strasse 5-7**
**D-83313 Siegsdorf (DE)**

Patentinhaber: **IBOS QUALITÄTSSICHERUNGS-SYSTEME GMBH**
**Jülicher Str. 336**
**D-52070 Aachen (DE)**

(72) Erfinder: **BREIL, Jürgen**
**Innerlohen 4**
**D-8221 Grabenstätt (DE)**
Erfinder: **HAUPT, Martin**
**Mefferdatisstr. 22**
**D-5100 Aachen (DE)**

(74) Vertreter: **Flach, Dieter Rolf Paul, Dipl.-Phys. et al**
**Patentanwälte**
**Andrae/Flach/Haug/Kneissl**
**Prinzregentenstrasse 24**
**D-83022 Rosenheim (DE)**

## Beschreibung

Die Erfindung betrifft ein Verfahren zur Herstellung von flächen- und im Querschnitt ringförmigen Extrudaten nach dem Oberbegriff des Anspruches 1 sowie eine Vorrichtung zur Durchführung des Verfahrens nach Anspruch 18.

Ein Verfahren zur Regelung der Dicke von extrudierten Flachfolien oder Platten aus thermoplastischem Kunststoff ist beispielsweise aus der DE 31 07 701 C2 bekannt geworden. Bei diesem Verfahren werden bei der kontinuierlichen Dickenmessung der Flachfolie oder Platte mittels eines Dickenmeßgerätes quer zur Abzugsrichtung jeweils Meßwerte gemessen und gemittelt und eine Steuerung in Abhängigkeit der festgestellten Abweichung der Istwerte von einer Sollwert-Vorgabe durchgeführt.

Es handelt sich dabei uni einen klassischen Nachregelungsprozeß in Abhängigkeit der festgestellten Differenzsignale zwischen Ist- und Sollgrößen.

Ein ähnliches Verfahren ist auch aus der EP 0 203 479 A2 bekannt geworden. Auch hier wird über Meßwertaufnehmer ein spezifischer Mittelwert gebildet, ein Sollwert festgelegt und nach Maßgabe der Abweichung des Istwertes von dem Sollwert die Regeleinrichtung korrigierend verändert.

Obgleich mit derartigen Verfahren und Vorrichtungen partielle Verbesserungen möglich sind, hat sich jedoch gezeigt, daß insbesondere bei einem von vielen Stellparametern abhängigen Regelungsverfahren eine in möglichst kurzer Zeit erreichbare Optimierung und eine nachfolgende Stabilisierung der erreichten optimalen Aussteuerung nur schwer möglich ist, insbesondere dann, wenn die Streuung der Abweichung möglichst gering sein soll.

Aufgabe der vorliegenden Erfindung ist es von daher, ein gegenüber dem Stand der Technik verbessertes Verfahren und eine zugehörige Vorrichtung zu schaffen, wodurch insbesondere auf dem Gebiet der Herstellung von flächen- und ringförmigen Extrudaten eine optimalere Steuerung im Hinblick auf eine bestimmte Zielvorgabe möglich wird.

Die Aufgabe wird erfindungsgemäß bezüglich des Verfahrens entsprechend den im Anspruch 1 und bezüglich der Vorrichtung entsprechend den im Anspruch 18 angegebenen Merkmalen gelöst. Vorteilhafte Ausgestaltungen der Erfindung sind in den Unteransprüchen angegeben.

Durch die vorliegende Erfindung wird ein völlig neuartiger Weg beschritten.

Erfindungsgemäß erfolgt die Steuerung in Abhängigkeit einer Zielvorgabe nach der Methode der Evolutionsstrategie.

Bei der Methode der Evolutionsstrategie wird mittels der Grundprinzipien "Mutation" und "Selektion" eine zumindest teilweise und/oder tendentiell zufällige Änderung der Steuerungsparameter, d.h. der Stellgrößen, durchgeführt, um nach der Überprüfung der sich verändernden Qualitäts- und Gütevorgaben anhand der nachfolgend vorgenommenen "Selektion" festzustellen, ob aufgrund der Mutation eine Veränderung hin zur gewünschten Optimierung und Qualitätssteigerung entsprechend den Vorgaben feststellbar ist. Bei festgestellter Verbesserung kann ein derart durch eine "Mutation" entstandener verbesserter Parametersatz als Ausgangspunkt für eine weitere Verbesserung der Maschineneinstellung ausgewählt werden. Die Mutation verändert also die Maschineneinstellung über einen Zufallsprozeß bzw. im wesentlichen über einen Zufallsprozeß, wobei im Rahmen der Selektion die verbesserten Maschineneinstellungen als Ausgangspunkt für einen nächsten Mutationsschritt ausgewählt werden.

Die Evolutionsstrategie als solche zur Optimierung technischer Systeme ist zwar grundsätzlich bekannt. Insoweit wird nur beispielhaft auf die Veröffentlichung von Rechenberg, I. "Evolutionsstrategie, Optimierung technischer Systeme nach Prinzipien der biologischen Evolution, Frommann-Holzboog, Stuttgart, 1973" und Schwefel, H.P. "Numerische Optimierung von Computer Modellen, Basel, Stuttgart, Birkhäuser, 1977" verwiesen. Allerdings ist bisher nicht ansatzweise daran gedacht worden, das Evolutionsstrategie-Verfahren auch bei der Herstellung von flächen- und im Querschnitt ringförmigen Extrudaten bei Extrusionsanlagen anzuwenden.

Gerade aber die Anwendung der Evolutionsstrategie auf diesem Gebiet schafft überraschende und nicht erwartete Vorteile.

Die Evolutionsstrategie ist dabei ein Parameteroptimierverfahren, das bei hochdimensionalen Problemstellungen und multimodalen Zielfunktionen (Funktionen mit mehreren Nebenmaxima), selbst unter Einfluß von stochastischen Störungen erfolgreich anwendbar ist.

Als besondere Vorteile der Evolutionsstrategie lassen sich dabei nennen:
- Modellunabhängigkeit
  Die meisten Optimierungsstrategien implizieren ein Modell der Zielfunktion.
  Die Evolutionsstrategie benötigt keinerlei Modell, kann aber ein Modell verwenden und es lokal und adaptiv der realen Zielfunktion anpassen.
- Störgrößenunabhängigkeit
  Bei der Evolutionsstrategie beeinflussen Störgrößen nicht die Konvergenzsicherheit, sondern nur die Konvergenzgeschwindigkeit. Bezogen auf die Betriebspunktoptimierung können sowohl Störungen des Prozesses als auch der Meßtechnik oder der Aktoren kompensiert werden. Durch diese Eigenschaft ermöglicht die Strategie selbst die Verwendung subjektiver Beurteilungen von Qualitätsmerkmalen für die Optimierung.

- Komplexität

Die Evolutionsstrategie erlaubt die Optimierung von Aufgabenstellungen beliebiger Dimensionalität.

- Restriktionen und Optimierziele

Die Restriktionen und Optimierziele können frei definiert werden.

Erfindungsgemäß wird die Evolutionsstrategie durch Strategieparameter gesteuert, die deterministisch oder stochastisch geändert werden können. Vorteile bietet dabei auch eine Vermischung der deterministischen oder stochastischen Methode, gegebenenfalls auch unter zusätzlicher Berücksichtigung von fest eingestellten Parametern.

Als besonders günstig erweist sich gemäß einer Weiterbildung der Erfindung zur Erhöhung der Konvergenzgeschwindigkeit Prozeßwissen als qualitatives Prozeßteilwissen in die Evolutionsstrategie einzubringen.

Schließlich ist es bei der Evolutionsstrategie auch möglich, eine Konvergenzbeschleunigung bei der Betriebspunktoptimierung durchzuführen. Dabei muß allerdings bedacht werden, daß eine hohe Konvergenzgeschwindigkeit einer hohen Konvergenzsicherheit diametral gegenübersteht und beide sich gegenseitig ausschließen. Bei den meisten Aufgabenstellungen in der Betriebspunktoptimierung ist aber die Geschwindigkeit das dominante Kriterium. Die Aufgabe lautet, die Maschineneinstellung in möglichst kurzer Zeit zu verbessern. Lautet dagegen die Aufgabenstellung, den besten Betriebspunkt in beliebiger Zeit zu finden, so müssen die entsprechenden Mechanismen der Evolution verwendet werden.

Die Strategie kann also sehr genau der Problemstellung angepaßt werden.

Fest vorgegebenes oder während des Prozesses adaptiv erworbenes Prozeßwissen kann eingesetzt werden, um beispielsweise die Konvergenzgeschwindigkeitzu erhöhen.

Schließlich kann die Konvergenzgeschwindigkeit auch noch dadurch erhöht werden, daß beispielsweise bei einem physikalischen Prozeß mit entkoppelten Teilprozessen das Verfahren der Evolutionsstrategie im Sinne einer Parallel-Optimierung auf jeden Teilprozeß separat angewandt wird. Beispielsweise bei der Herstellung einer verstreckten Folie kann davon ausgegangen werden, daß die Folienbahn in Abzugsrichtung längs ihrer mittleren Symmetrieebene als aus zwei entkoppelten Teilprozessen bestehend beurteilt wird, was bedeutet, daß die Dickenparameter auf der rechten Folienbahn nicht durch Einstellgrößen auf der linken Folienbahn und umgekehrt beeinflußt werden. Damit läßt sich das Evolutionsstrategie-Verfahren im Sinne einer Parallel-Optimierung für beide Folienbahnhälften getrennt durchführen.

Die Evolutionsstrategie kann also ganz allgemein aufgrund dieser Eigenschaften zu einem Baustein in der Qualitätssicherung werden, der die online Rückkopplung der Qualitätsmerkmale auf die Stellgrößen durchführt.

Besonders überraschend ist das angewandte Verfahren im Falle einer Dickenregelung an monoaxialen oder biaxialen Streckanlagen für Kunststofffolien. Denn trotz des nichtlinearen Verhaltens der Folie auf der Reckstrecke kann beim Quer- und/oder Längsreckverfahren durch das erfindungsgemäße Verfahren eine Korrelation zwischen den Ausgangsgrößen, d.h. dem gemessenen Dickenprofil und den Eingangsgrößen, d.h. den Stellgliedern an der Exrusionsdüse hergestellt werden. Nach dem Stand der Technik ist nämlich keine korrekte Zuordnung einzelner quer zur Abzugsrichtung liegender Foliensegmente zu den zugehörigen Stellelementen der Extrusionsdüse möglich. Durch das Evolutionsstrategie-Verfahren jedoch wird durch die zufallsverteilte Suche nach einem Optimum trotz der weitgehend nicht bekannten Korrelation zwischen den Ausgangsgrößen und den eingangsseitig vorhandenen Stellgrößen eine gleichwohl optimierte Ansteuerung der Stellglieder gewährleistet.

Vor allem also bei der Dickenregelung an monoaxialen bzw. auch biaxialen Streckanlagen wird bei dem erfindungsgemäßen Verfahren das nichtlineare Verhalten der Strecke automatisch berücksichtigt, so daß eine korrekte Zuordnung der Foliensegmente zu den zugehörigen Stellelementen der Extrusionsdüse ermöglicht wird und die Regelverstärkung ständig an die vom Arbeitspunkt abhängige Streckenverstärkung angepaßt wird.

Das gleiche gilt auch bei der Herstellung von Blasfolien mittels Ringdüsen mit temperatursteuerbaren Temperiersektoren, verstellbarem Innendorn oder flexiblem Außenring als Stellelemente zur lokalen Dickenbeeinflussung.

Schließlich kann das erfindungsgemäße Verfahren auch bei einer Dickenregelung an Flachfolien- oder Beschichtungsanlagen mit einem Breitschlitzwerkzeug realisiert werden, bei dem die lokale Schmelztemperatur, der lokale Austrittsspalt oder ein im Fließkanal liegender Staubalken quer zur Extrusionsrichtung eingestellt werden.

Die Erfindung wird nachfolgend zunächst im allgemeineren und dann anhand spezifischer Ausführungsbeispiele näher erläutert. Dabei zeigen im einzelnen:

Figur 1 :

eine Darstellung für Eingriffsmöglichkeiten bei der Evolutionsstrategie, insbesondere zur Erhöhung der Konvergenzgeschwindigkeit;

Figur 2 :

eine Darstellung bezüglich des variablen Einbringens von adaptiertem Prozeßwissen mit über die Zeit veränderter Erwartungsverschiebung und Standardabweichung;

Figur 3 :

eine Darstellung zur Erläuterung der sich erhöhenden Qualität bei nachfolgenden Mutationsschritten;

Figur 4 :

eine schematische Darstellung bezüglich der Realisierung eines neuronalen Netzes;

Figur 5 :

eine schematische Übersicht über die Anpassung der Optimierungsstrategie an einen Kunststoffverarbeitungs-Prozeß;

Figur 6 :

die Bestimmung der Gesamtqualität am Bespiel zweier Einzelqualitäten;

Figur 7a und 7b :

zwei Darstellungen bezüglich unterschiedlicher Definitionen der Gesamtqualitätsfunktion;

Figur 8 :

eine schematische Übersicht über eine Flachfolienextrusions-Anlage mit biaxialer Verstreckung;

Figur 9 :

eine schematische auszugsweise Modell-Darstellung einer biaxialen Folienreckanlage mit Wärmebolzen zur Abstandseinregelung einer Werkzeuglippe an einer Extruderdüse;

Figur 10 :

eine schematische Darstellung der Kopplung des Optimiersystems bei einer Folienreckanlage;

Figur 11 :

eine schematische Darstellung des Ergebnisses der Betriebspunktoptimierung beim Anfahren einer Anlage;

Figur 12 :

die schematische Darstellung des Ergebnisses der Betriebspunktoptimierung zur Erläuterung einer Stellgrößenkompensation.

Bei Anwendung der Evolutionsstrategie auf technische Systeme ist gleichermaßen von den Grundprinzipien der "Mutation" und der "Selektion" auszugehen. Ein zur Betriebssteuerung als wertvoller bzw. verbesserter anerkannter Parametersatz wird dabei üblicherweise "Elter" und ein durch Mutation entstandener neuer Parametersatz oder Vektor "Nachkomme" genannt. Geht man von einem vorgegebenen oder in einem vorhergehenden Schritt ermittelten Paramtersatz aus und führt kleine Änderungen im Sinne einer kleinen Schrittweite durch, so ist eine größere Erfolgswahrscheinlichkeit gegeben, daß eine Verbesserung feststellbar ist. Größere Änderungen ergeben im Gegensatz dazu eine kleinere Erfolgswahrscheinlichkeit. Dem wird durch die Verteilungsdichte der Zufallsfunktion Rechnung getragen.

Eine der gebräuchlichsten Verteilungsdichtefunktionen ist dabei die Normalverteilung, deren Form durch die Streuung oder Standardabweichung bestimmt wird.

Bei der Betriebspunktoptimierung wird also durch die Mutation die Maschineneinstellung über einen Zufallsprozeß verändert.

Die Selektion beinhaltet die Verdrängungsvorschrift, die bewertet, ob eine Mutation als wertvoll anerkannt wird oder nicht.

Nachteilige Mutationen werden verworfen, vorteilhafte können zur Erzeugung neuer Nachkommen beitragen.

Ein einfaches Selektionsschema könnte dergestalt aussehen, daß jeder Nachkomme mit der besten Qualität neuer Elter wird. Von diesem Elter ausgehend werden weitere Nachkommen erzeugt usw. Auf diese Weise verschiebt die Strategie den Parametervektor so, daß die abhängige Größe (Qualität) maximal wird.

Im Beispiel der Betriebspunktoptimierung heißt dies also, daß die Selektion "wertvolle" Maschineneinstellungen auswählt, also Maschineneinstellungen, die eine verbesserte Qualität ergeben. Werden darüber hinaus mehrere Eltern als Ausgangspunkt von Mutationen verwendet, so spricht man von einer Population. Insbesondere bei der Überwindung von Nebenmaxima bei multimodalen Zielfunktionen (mit mehreren Nebenmaxima) ist im Rahmen der Rekombination ein Austausch von Informationen zwischen unterschiedlichen Eltern möglich, beispielsweise dadurch, daß der Parametervektor, der als Ausgangspunkt bei der Mutation eines Nachkommens dient, über eine teilweise zufällige Vorschrift aus mehreren Eltern gebildet wird. Dadurch ergibt sich eine noch höhere Sicherheit bei der Optimierung.

Schließlich können im Sinne einer Optimierung auch nach einer begrenzten Zahl von Optimierschritten Eltern eleminiert und/oder beispielsweise "erfolgreiche" Eltern durch häufigere Mutationen belohnt werden.

Dadurch können jeweils vorteilhafte Entwicklungen verstärkt werden.

Durch entsprechendes Einbringen von Prozeßwissen kann die Konvergenzgeschwindigkeit der Evolutionsstrategie bei der on-line Betriebspunktoptimierung kunststoffverarbeitender Prozesse nochmals verbessert werden. Prozeßwissen setzt bei der Auswahl der Stellgrößen und deren Definitionsbereich ein und wird bei der Wahl der Ausgangsgrößen und der Bildung der Gütefunktion benötigt.

Ebenfalls können bekannte Zusammenhänge zwischen Ein- und Ausgangsgrößen eine Vorzugsrichtung der Strategie festlegen z. B. in dem Sinne, daß bei Vergrößerung der Drehzahl der Massedurchsatz steigt. Es muß sich abei um ein Wissen und nicht um Vermutungen handeln, da Wissen eine Beschleunigung fördert und Vermutungen oder falsche Aussagen kontraproduktiv sind und die Optimierung verlangsamen oder hindern.

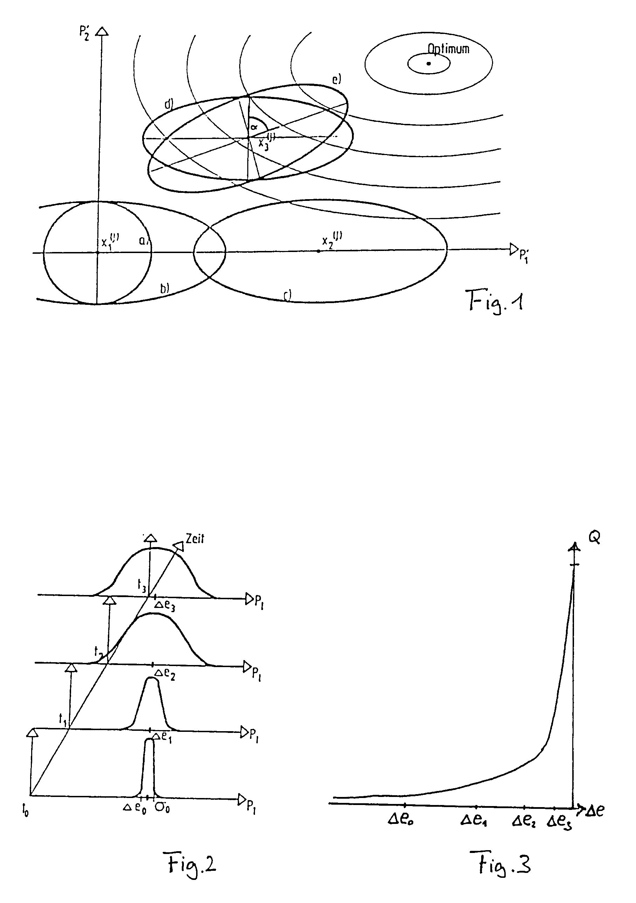

Anhand von Figur 1 sind einige der Eingriffsmöglichkeiten in die Mutationen dargestellt um eine Konvergenzbeschleunigung zu erzielen.

Dabei sind in Figur 1 die Höhenlinien eines Qualitätsgebirges über einer zweidimensionalen Parameterebene $P_1$ und $P_2$ aufgetragen.

Die Ellipsen sind Orte gleicher Wahrscheinlichkeit eines Nachkommens bei einer Mutation.

Sind die Standardabweichungen der Normalverteilung in beiden Hauptachseinrichtungen gleich so werden die gleichen Wahrscheinlichkeiten durch einen Kreis repräsentiert (Fall a). Wird die Standardabweichung für $P_1$ größer als für $P_2$, so geht der Kreis in eine Ellipse über (Fall b). Durch diese unterschiedliche Skalierung können Erfolge der Optimierung bei der größeren Variation eines Parameters berücksichtigt werden.

Die Skalierung kann dann durch die Rekombination oder durch deterministisches Prozeßwissen bestimmt werden.

Sind Erfolge in einer bestimmten Achsenrichtung am wahrscheinlichsten, so kann der Erwartungswert bei der Mutation entsprechend verschoben werden. Der Erwartungswert ist der Ursprung der Verteilungsdichtefunktion der Zufallszahl. Die Erwartungswertverschiebung wirkt sich als Verschiebung der gesamten Ellipse in diese Achsenrichtung aus (fall c).

Wird der Erwartungswert für alle Parameter verschoben, so kann der Ellipsenursprung beliebig im Raum positioniert werden (Fall d).

Im allgemeinen ist nicht zu erwarten, daß der lokale Gradient des Zielgebirges mit einer Hauptachsenrichtung übereinstimmt. Durch eine variable Metrik kann die Hauptachse der Ellipse in den Gradienten gedreht werden (Fall e). Diese Operation ist eine Koordinatentransformation, die durch Rekombination bei einer großen Population von der Evolutionsstrategie erlernt werden kann oder über deterministisches Prozeßwissen bestimmt wird.

Prozeßwissen, insbesondere wenn es qualitativ formuliert ist, besitzt nicht für alle Betriebszustände der Maschine die gleiche Gültigkeit.

Im allgemeinen ist der Wahrheitsgehalt um so größer, je weiter der aktuelle Betriebspunkt vom optimalen entfernt ist. Diese Aussage gilt natürlich nur, solange sich die Maschine in einem zulässigen Betriebsfeld befindet.

Der unterschiedliche Informationsgehalt kann durch das variable Einbringen des Prozeßwissens berücksichtigt werden. Beim Einfahren oder Einrichten der Maschine wird das Wissen stark berücksichtigt, in der Nähe des Optimums kommt es nicht mehr zur Geltung. Dieses Verfahren setzt voraus, daß eine Optimumsnähe definiert werden kann. Für viele Qualitätsmerkmale in der Kunststoffverarbeitung ist diese Voraussetzung gegeben.

In Figur 2 ist das variable Einbringen von Prozeßwissen zur Bestimmung der Erwartungswertverschiebung und Skalierung eines Parameters in Abhängigkeit eines Qualitätsmerkmales dargestellt. Beim Anfahren des Prozesses (Zeitpunkt $t_0$) besitzt die Einzelqualität $Q_i$ einen kleinen Wert (Figur 3), d.h. die Einzelqualität ist weit vom optimalen Wert entfernt. Bei großem Abstand zum optimalen Wert der Einzelqualität ergibt das variable Prozeßwissen eine größere Erwartungsverschiebung $\Delta e_0$ für die Einstellgröße $P_k$, die in Figur 2 zum Zeitpunkt $t_0$ durch den größeren Abstand von $\Delta e_0$ zum Nullpunkt der Zeitachse zum Ausdruck kommt. Ist das Prozeßwissen quantitativ bekannt, so kann die Standardabweichung $\sigma$ sehr klein gesetzt werden. Die Standarderweichung $\sigma$ heißt ja, daß die Streuung des Zufallsprozesses äußerst gering ist, im Extremfall sogar auf Null gesetzt werden kann.

In diesem Fall geht also die Optimierung in eine sog. P-Regelung über, also in einen Proportionalregler, bei der die Regelabweichung über ein dem Prozeßwissen entsprechendes Proportialglied erfaßt und in Abhängigkeit davon eine Stellgrößenänderung durchgeführt wird. Die Erwartungswertverschiebung $\Delta e_0$ entspricht also beim Ausgangspunkt dem P-Anteil eines P-Reglers bei einer Streuung "Null".

Ist das Wissen nur qualitativ gegeben, so sollte die Erwartungswertverschiebung kleiner als die Standardabweichung sein. Je näher sich die Maschineneinstellung dem Optimum nähert (Produktionseinstellung), um so weniger wird die Erwartungswertverschiebung berücksichtigt. Das eingebrachte Prozeßwissen nimmt kontinuierlich ab und die Strategie arbeitet ohne Determinismus. In Figur 2 ist dieser Übergang zu den Zeitpunkten $t_1$, $t_2$ und $t_3$ dargestellt. Bei jedem weiteren nachfolgenden Optimierschritt von $t_0$ bis $t_3$ wird der Abstand der Erwartungswertverschiebung $\Delta e_0$ zum Nullpunkt der Zeitachse kleiner (deren Bedeutung und Inhalt nimmt also ab), und die Standardabweichung $\sigma$ nimmt zunehmend größere Werte an, was bedeutet, daß die innerhalb der Standardabweichung liegende Schrittweite zufallsabhängig zunehmend größere Bedeutung erhält.

Durch diese Eingriffsmöglichkeit bei der Evolutionsstrategie unter Berücksichtigung des variablen Prozeßwissens kann letzlich die Dimension der Optimieraufgabe um eine Größenordnung verringert werden; dadurch steigt letztlich die Konvergenzgeschwindigkeit. Nur der Vollständigkeit halber wird erwähnt, daß durch das variable Einbringen des Prozeßwissens der Übergang kontinuierlich gestaltet und für jeden Parameter getrennt durchgeführt werden kann, je nach Wissen. Es können quasi einzelne Einstellgrößen geregelt werden, während für andere von Beginn an keine Einschränkungen getroffen werden.

Bei der Selektion wird das Prozeßwissen bereits im Vorfeld, nämlich bei der Auswahl der geeigneten Strategie, eingebracht.

Zum Wissen zählen die geeignete Kodierung der Aufgabenstellen, Schrittweitensteuerung (falls keine Skalierung verwendet oder übergeordnet wird) und die Wahl der Selektionsmechanismen.

Die Selektionsmechanismen können aber auch während der Optimierung geändert werden. So ist beim Einrichten eine Strategie mit einem (überlebenden) Elter und einem Nachkommen oder einem (sterbenden) Elter und fünf bis acht Nachkommen zu bevorzugen. Die Schrittweitensteuerung kann über die 1/5 Erfolgsregel durchgeführt werden, die besagt, daß bei fünf Versuchen zumindest ein besserer Punkt oder Wert im Sinne eines Fortschrittes erzielt wurde.

Prozeßwissen kann sowohl als festes als auch adaptiertes Wissen in die Evolutionsstrategie eingebracht werden.

Festes Wisses wird durch eine Abhängigkeitsfunktion der Eingangsgröße von Ausgangsgrößen in der Form $P_e = f(Q_j)$ definiert. Bei qualitativem Wissen sollte die Abhängigkeitsfunktion "schwach" formuliert werden (Erwartungsverschiebung klein, Skalierung groß), während quantitatives Wissen "stark" eingebracht werden kann. Weiterhin muß der Gültigkeitsbereich für das Wissen, der auch als Übergang (Funktion) beschrieben werden kann, festgelegt werden.

Adaptiertes Wissen sind Erkenntnisse über Prozeßzusammenhänge, die erst während der Optimierung erworben werden. Durch eine deterministische Auswertung der jeweils n-besten Betriebspunkte kann eine individuelle Anpassung der Strategieparameter an das Optimierproblem durchgeführt werden.

Die Erfolgsquote gemäß Rechenbergs 1/5 Regel ist ein Maß für die Gesamtschrittweite. Diese Regel besagt, daß bei fünf Versuchen zumindest ein besserer, d.h. dem Optimum näher liegender Punkt im Durchschnitt vorliegen soll. Wenn davon im Mittelwert abgewichen wird, dann kann entweder die Schrittweite größer (weil sich der aktuelle Parameterwert vom Optimum weiter entfernt) oder aber kleiner gemacht werden (wenn nämlich der aktuelle Vektorwert dem Optimum näher liegt). Eine große Schrittweite bedeutet dabei, wie ausgeführt, eine größere Standardabweichung, also eine Zufallsverteilung von Nachkommen in größerem Schrittweitenabstand zu einen vorausgegangenen Eltern.

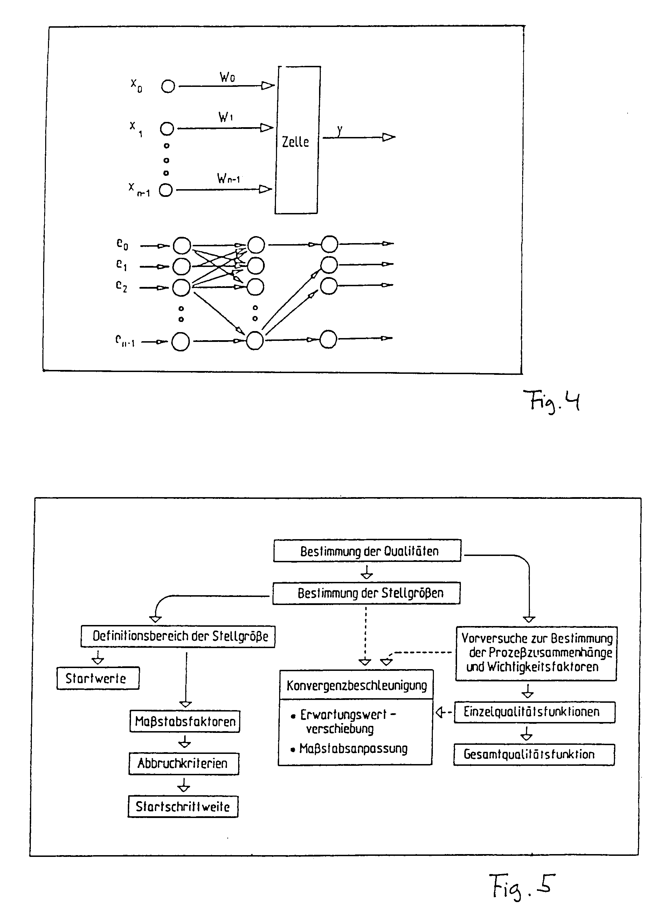

Anhand von Figur 4 ist nur gezeigt, daß nur die Umsetzung eines derartigen Verfahrens besonders günstig anhand von Computern mit neuronalen Netzen erfolgen kann.

Die "Nervenzelle" wurd durch ein Processing-Element repräsentiert, welches viele Eingänge aber nur einen Ausgang besitzt. Das Ausgangssignal wird über eine nichtlineare Funktion (z. B. Sigmoid-Funktion) aus der gewichteten Summe der Eingangssignale bestimmt. Die Processing-Elemente werden zu Netzwerken verbunden, die meist in Lagen organisiert sind. In Figur 4 ist ein dreilagiges "feed forward Netz" gezeigt, das aus den Ein- und Ausgangslagen sowie der verstreckten Lage besteht.

Nachfolgend wird die Anwendung der Betriebspunktoptimierung bei einem kunststoffverarbeitenden Prozeß näher erläutert.

Bedingt durch die hohe Flexibilität der geänderten Evolutionsstrategie muß die Optimierung an den jeweiligen kunststoffverarbeitenden Prozeß angepaßt werden. Dazu müssen die folgenden Schritte durchgeführt werden:

- Zieldefinition
- Bestimmung der Einzelparameter mit Randbedingungen
- Strategiewahl
- Bestimmung der Startbedingungen

In Figur 5 ist die zeitliche Abhängigkeit der Maßnahmen dargestellt.

Die Formulierung der Zielfunktion umfaßt zunächst die Festlegung der Größen der Produktion, die optimiert werden soll. Die Ausgangsgrößen sind die abhängigen Variablen der Optimierung und können sowohl Prozeß- und Produktgrößen als auch Produktionsgrößen sein.

Vor allem müssen die Qualitätsmerkmale der Ausgangsgrößen gebildet werden.

Bei der Herstellung einer biaxial verstreckten Folie soll beispielsweise die Dickenstreuung minimiert und der Dickenmittelwert optimiert werden.

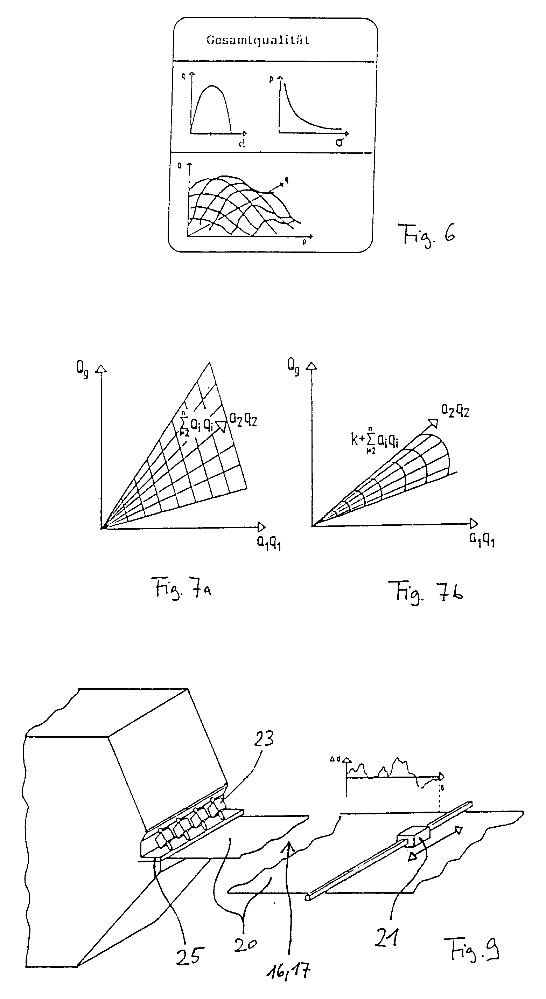

Durch die Bildung der Einzelqualitäten werden die unterschiedlichen physikalischen Größen unter Berücksichtigung der Anforderungen normiert, so daß Einzelqualitäten zu maximierende Größen darstellen. Die Umformung wird, wie in Figur 6 dargestellt, über Funktionen durchgeführt, die stetig differenzierbar sein sollen.

Im dritten Schritt werden die Einzelqualitäten zu einer Gesamtqualität zusammengefaßt. Hierbei wird die Bedeutung der Einzelqualitäten festgelegt. Die einfachste Methode ist das gewichtete Aufsummieren. Dabei werden die Prioritäten durch die Gewichtungsfaktoren $a_i$ festgelegt.

$$Q_g = a_1 \cdot Q_1 + a_2 \cdot Q_2 + ... + a_n \cdot Q_n$$

Ganz allgemein gilt, daß die Gesamtqualitätsfunktion das Ziel der Optimierung repräsentieren muß.

Dabei ist die lineare Gesamtqualitätsfunktion, wie vorstehend wiedergegeben, nicht immer sinnvoll. Insbesondere bei einem dominanten Qualitätsmerkmal ist die Optimierung nur dann als erfolgreich zu bewerten, wenn das Merkmal verbessert wird. Dies kann durch Multiplikation der Qualität des Merkmals mit der Summe der anderen Einzelqualitäten erreicht werden.

$$Q_g = a_1 \, {}^*Q_1 \, {}^*(K + a_2 \, {}^*Q_2 + a_3 \, {}^*Q_3 + \dots a_n \, {}^*Q_n)$$

In Figur 7a bzw. 7b ist für die unterschiedlichen Definitionen der Verlauf der Gesamtqualitätsfunktion dargestellt. Nach der ersten Definition ergibt sich eine Ebene im Raum, nach der zweiten eine gewölbte Kontur.

Die Messung der Qualitätsmerkmale erfolgt üblicherweise durch entsprechende Meßprinzipien und Sensoren für die physikalischen Größen.

Schließlich ist aber sogar eine subjektive Erfassung der Qualitätsmerkmale möglich. Diese ist im Prinzip gleichzusetzen mit einer objektiven Erfassung der Qualitätsmerkmale, die allerdings von Störgrößen überlagert ist. Die Störungen können sowohl zufällig als auch systematisch sein. Bei der Evolutionsstrategie aber haben Störungen keinen Einfluß auf die Konvergenzsicherheit, sondern nur auf die Konvergenzgeschwindigkeit. Diese Eigenschaft ermöglicht die Verwendung subjektiv erfaßbarer Qualitätsmerkmale zur Betriebspunktoptimierung.

Schließlich kann auch eine Korrelation zwischen Prozeßgrößen und Qualitätsmerkmalen bestehen. Ist beispielsweise die Übertragungsfunktion zwischen einer oder mehreren Prozeßgrößen und einem daraus resultierenden Qualitätsmerkmal bekannt (beispielsweise die Prozeßgröße der Spaltbreite der Extruderlippe im Verhältnis zur gemessenen Dicke der Folie), so kann die Qualität über die Prozeßgrößen ermittelt werden. Die Übertragungsfunktion kann entweder durch analytische Modellbildung oder empirisch (Korrelation) bestimmt werden.

Die Stellgrößen stellen schließlich im Gesamtprozeß die unabhängigen Variablen der Optimierung dar.

Die Evolutionsstrategie wird nachfolgend anhand einer Flachfolienextrusion mit biaxialer Verstreckung erläutert.

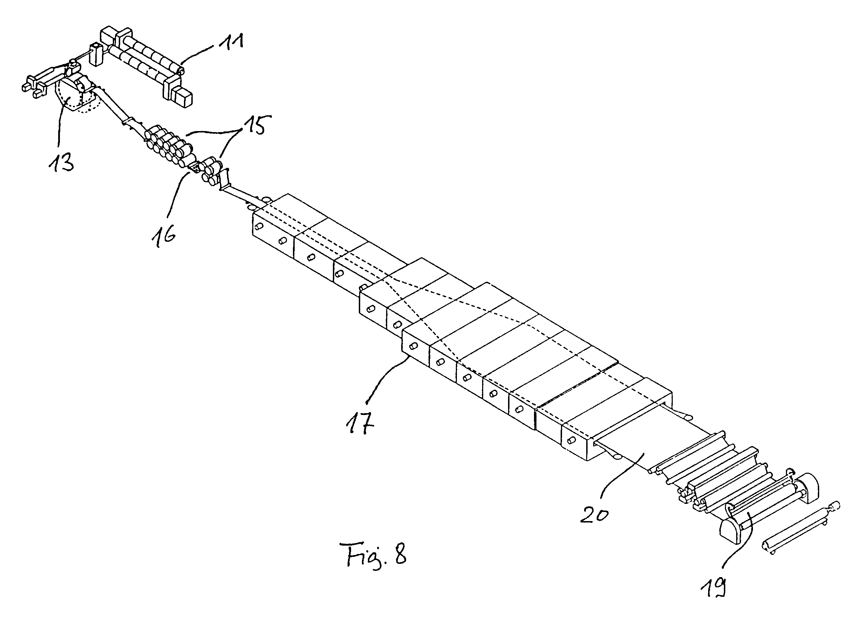

Dabei ist in Figur 8 in schematischer Darstellung eine biaxiale Streckvorrichtung mit einen Extruder 11, einer ersten Abzugs- und Kühlwalze 13, nachfolgenden Walzen 15 mit einer in diesem Bereich befindlichen Längsreckzone 16 und einer sich daran anschließenden Breitreckmaschine 17 gezeigt.

In der Breitreckmaschine 17 kann z. B. in bekannter Weise mittels einer umlaufenden Kluppenketten-Anordnung die Folie 20 in Querrichtung gereckt werden. Danach werden die Ränder beschnitten und die Folie auf einem Wickler 19 aufgewik-

kelt.

Nach der Breitreckzone 17 ist ein quer zur Abzugsrichtung verfahrbarer Meßkopf 21 vorgesehen, mittels dessen die Dicke der gereckten Folie gemessen werden kann. Aus Kostengründen wird dabei in der Regel ein Meßkopf vorgesehen, der quer zur Abzugsrichtung über eine Vielzahl von Meßstellen verfahrbar ist.

Biaxial verstreckte Folien können extrem dünn sein und eine Dicke von unter 1 $\mu$m aufweisen. Derartige Folien können beispielsweise als Kondensatorfolien, als Magnetbänder im Audio- und Videobereich oder aber auch in der Verpackungsindustrie eingesetzt werden.

Die Dickenverteilung über die Folienbreite wird Dickenprofil genannt. Sie kann durch die Düsenkontur des Breitschlitzwerkzeuges beeinflußt werden.

Die Düsenkontur wiederum kann beispielsweise über Wärmedehnbolzen 23 beeinflußt werden, die in das Werkzeug integriert sind und auf die Düsenlippe 25 drücken, wie dies in Figur 9 dargestellt ist.

Somit sind die zu optimierenden Stellgrößen die Temperatur-Wärmedehnbolzen, während die Dickenverteilung der Folie die Zielgröße darstellt.

Der Verstreckprozeß ist nichtlinear. Wird die Düsenkontur so eingestellt, daß beim Austritt aus dem Werkzeug eine konstant dicke Folie vorliegt, so besitzt die Folie nach der Verstreckung ein Dickenprofil mit nichtkonstanter Dicke. Wird das Düsenprofil an einer Stelle geändert, so verändert sich bedingt durch die Massenkonstanz das Dickenprofil der gesamten Folie.

Das Übertragungsverhalten der Reckanlage kann somit nicht durch Proportionalglieder beschrieben werden. Zusätzlich wirken Störgrößen wie Konvektion oder Temperaturgradienten in der Folie auf den Verstreckungsprozeß ein.

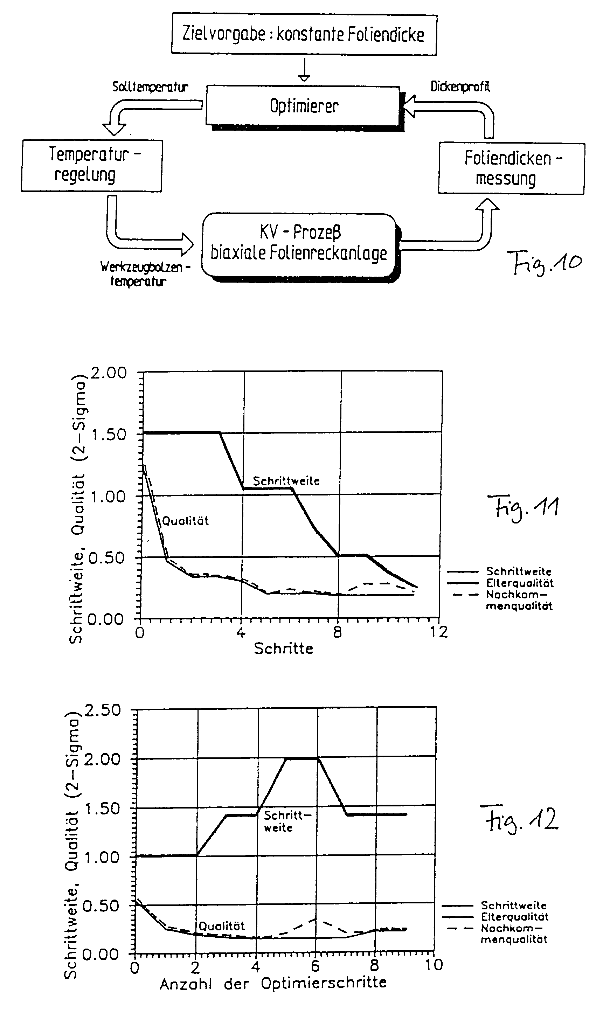

In Figur 10 sind die schematischen Zusammenhänge anhand der Zielvorgabe der Betriebspunktoptimierung bezüglich der Foliendicke dargestellt, wobei als Stellgrößen die beispielsweise 20 bis 30 Wärmedehnbolzen in der Extrusionsdüse im Sinne von 20 bis 30 Parametern einstellbar sind, die jeweils durch das Verfahren der Evolutionsstrategie optimiert werden. Die Zielvorgabe der durchgeführten Optimierung kann dabei lauten, daß die Extrusion und Herstellung einer Folie mit konstanter Dicke über die gesamte Breite auch nach Durchführung eines Längsreck- und Querreckprozesses möglich wird.

Die Evolutionsstrategie kann mit einem Elter oder mehreren Nachkommen durchgeführt werden. Die Überlebenszeit der Eltern kann dabei begrenzt werden. Das Prozeßwissen wirkt sowohl auf die Erwartungswertverschiebung als auch auf die Maßstabsanpassung. Die Schrittweitensteuerung kann gemäß der erwähnten 1/5 Regel durchgeführt werden.

Die Dickenabweichung der Folie wird als Qualitätsmerkmal herangezogen.

Dazu wird die Folie beispielsweise der Breite nach in 50 Zonen unterteilt und für jede Zone wird das Streuungsmaß der Dickenabweichung bestimmt.

Die Gesamtqualität kann als Streuungsmaß der Foliendicke über die gesamte Breite, berechnet aus den Qualitätsmerkmalen der 50 Folienzonen, festgelegt werden.

Für die Stellgrößen der Optimierung, den Werkzeugbolzentemperaturen, wirken zwei Restriktionen, die durch den Stellbereich der Wärmedehnbolzen und die maximale mechanische Belastung der Biegelippe in der Regel vorgegeben werden, beispielsweise in Form von

- Werkzeugbolzentemperaturen $200°C < T_{bn} < 300°C$

  $T_{bn} - T_{bn-1} < 40°C$
- Startwerte $T_{bn} = 250°C$ mit $n = 1 ... 15$

Die Temperaturerhöhung des Wärmedehnbolzenes bewirkt an einer nicht genau bekannten Stelle eine Abnahme der Foliendicke. Dies kann als Prozeßwissen berücksichtigt werden.

Nachfolgend wird eine Versuchsdurchführung erläutert:

Der prinzipielle Ablauf der Profiloptimierung ist in Figur 10 dargestellt. Zuerst werden die Bolzensolltemperaturen an die Temperaturregelung übergeben. Die Regelung stellt die Solltemperaturen im Prozeß ein und hält sie konstant. Der Prozeß erzeugt nun mit der geänderten Düseneinstellung eine geänderte Folie. Nach Ablauf der Prozeßtotzeit, die durch die Abzugsgeschwindigkeit und die Folienlänge zwischen Werkzeug und Dickenmeßkopf bestimmt wird, wird die Foliendicke gemessen und einem sog. Optimierer 31 übergeben. Der Optimierer 31 errechnet über die Gütefunktion die Qualität der Einstellung und bestimmt mit Hilfe der Evolutionsstrategie neue Bolzentemperaturen.

Diese Sollwerte werden wiederum einer Regelung 33, d.h. einer Temperaturregelung 33, übergeben, wodurch ein neuer Optimierschritt gestartet wird.

Figur 11 zeigt das Ergebnis eines durchgeführten Versuches der Optimierung beim Anfahren der Extrusionslinie.

Aufgetragen ist das Streumaß der Foliendicke und die Schrittweite der Optimierung über die Anzahl der Optimierschritte. Deutlich ist die Konvergenz der Dickenstreuung von einem Startwert 1,3 beim Schritt 0 bis auf einen Wert von ca. 0,19 bei Schritt 8 zu erkennen.

In Figur 12 ist die Reaktion der Optimierung auf eine starke Prozeßstörung dargestellt. Dazu wurde in der Breitreckanlage eine Hälfte der Temperierung ausgeschaltet, wodurch sich das Reckverhalten um 5 bis 7 % geändert hat. Die Störung ist durch eine deutliche Verschlechterung des Streuungsmaßes zu erkennen. Die Figur 12 zeigt weiterhin, daß der Einfluß der Störung durch die Optimierung nach wenigen Schritten eliminiert wird.

Verglichen mit einer deterministischen Regelung ist die Evolutionsstrategie beim Anfahren der biaxialen Folienreckanlage gleich schnell und im Endwert deutlich besser. Die hohe Konvergenzgeschwindigkeit ist auf das eingebrachte Prozeßwissen zurückzuführen. Die Optimierung arbeitet quasi als Regelung. Im Bereich des Optimums wird das Prozeßwissen verringert, so daß bei weiteren Regelschritten eine weitere Verbesserung zu erwarten ist.

**Patentansprüche**

1. Verfahren zur Herstellung von flächen- und im Querschnitt ringförmigen Extrudaten mittels einer Extrusionsanlage, mit einer insbesondere in Form einer Breitschlitz- oder Ringdüse ausgebildeten Extrusionsdüse, und mit mehreren quer zur Abzugsrichtung versetzt liegenden lokalen Einstellzonen, wobei mittels einer Dickenmeßeinrichtung die Extrudatdicke an quer zur Abzugsrichtung versetzt liegenden Positionen erfaßt wird, und bei dem zur Erzielung eines Solldickenprofils entsprechende Stellglieder in den Einstellzonen angesteuert werden, **dadurch gekennzeichnet**, daß die Optimierung der Dickenverteilung durch Minimierung der Dickenabweichung von dem quer zur Abzugsrichtung vorgegebenen Solldickenprofil mittels eines Evolutionsstrategieverfahrens durchgeführt wird, bei dem jeweils in Folge von zufälligen Änderungen (Mutationen) der Stellgrößen im Rahmen einer vorgebbaren Verteilungsdichtefunktion (Standardabweichung) neue Stellgrößen für die die Dickenverteilung beeinflussenden Stellglieder in den lokalen Stellzonen ermittelt werden, und anhand einer vorwählbaren Verdrängungsvorschrift (Selektion) eine Auswahl von im Hinblick auf das vorgegebene Solldickenprofil verbesserten Stellgrößen zur Ansteuerung der Stellglieder in den lokalen Stellzonen der Extrusionsanlage zur Durchführung eines nächsten Evolutionsschrittes durchgeführt wird.

2. Verfahren nach Anspruch 1, **dadurch gekennzeichnet**, daß eine Verdrängungsvorschrift verwendet wird, die eine Gesamtqualitätsfunktion als Ziel des vorgegebenen Solldickenprofils als zu erreichendes Optimum repräsentiert, wobei die Gesamtqualitätsfunktion aus normierten Einzelqualitäten zusammengesetzt wird, die jeweils durch Normierung der der Zielvorgabe entsprechenden physikalischen Ausgangsgrößen, nämlich des vorgegebenen Dickenprofils, gebildet sind.

3. Verfahren nach Anspruch 2, **dadurch gekennzeichnet**, daß die Gesamtqualität $Q_g$ gemäß der Methode des gewichteten Aufsummierens aus den Einzelqualitäten $Q_i$ und den Gewichtungsfaktoren $a_i$ mit $i = 1$ bis n gemäß der Formel

$$Q_g = a_1 \, {}^*Q_1 + a_2 \, {}^*Q_2 + \ldots + a_n \, {}^*Q_n$$

gebildet wird.

4. Verfahren nach Anspruch 2, **dadurch gekennzeichnet**, daß die Gesamtqualität $Q_g$ aus den Einzelqualitäten $Q_i$ mit den Gewichtungsfaktoren $a_i$ mit $i = 1$ bis n und einer weiteren Konstante K gemäß der Gleichung

$$Q_g = a_1 \, {}^*Q_1 \, {}^*(K + a_2 \, {}^*Q_2 + a_3 \, {}^*Q_3 + \ldots a_n \, {}^*Q_n)$$

gebildet wird.

5. Verfahren nach einem der Ansprüche 1 bis 4, **dadurch gekennzeichnet**, daß die Verteilungsdichtefunktion (Standardabweichung) und damit die Schrittweitensteuerung bei jeder Mutation in Abhängigkeit von der Differenz zwischen der quer zur Abzugsrichtung gemessenen Dickenverteilung des Extrudats und dem vorgegebenen Solldickenprofil verändert wird.

6. Verfahren nach Anspruch 5, **dadurch gekennzeichnet**, daß bei kleiner werdender Differenz der gemessenen Dickenverteilung des Extrudats zu dem vorgegebenen Solldickenprofil jeweils quer zur Abzugsrichtung die Verteilungsdichtefunktion (Standardabweichung) und damit die Schrittweitensteuerung zu kleineren Werten hin verändert wird.

7. Verfahren nach einem der Ansprüche 1 bis 6, **dadurch gekennzeichnet**, daß das Evolutionsstrategie-Verfahren an unterschiedliche Produktionsbedingungen und/oder zur Erhöhung der Konvergenzgeschwindigkeit zur Erreichung einer optimierten Einstellung in kürzerer Zeit angepaßt wird, und zwar unter Berücksichtigung von
   - Prozeßvorwissen in Form einer eine gegebene Abhängigkeit der Ausgangsgrößen von den Stellgrößen wiedergebenden Übertragungsfunktion
   und/oder

   - automatisch adaptivem Prozeßwissen über die Übertragungsfunktion zwischen lokaler Dickenbeeinflussung und den tatsächlich gemessenen Meßwerten der Dickenverteilung.

8. Verfahren nach Anspruch 7, **dadurch gekennzeichnet**, daß die Anpassung des Evolutionsstrategie-Verfahrens dadurch erfolgt, daß zumindest eine Hauptachsenrichtung der Verteilungsdichtefunktion (Standardabweichung) in einem n-Parameterraum durch Skalierung, d.h. Vergrößerung oder Verkleinerung verändert wird.

9. Verfahren nach Anspruch 7 oder 8, **dadurch gekennzeichnet**, daß eine Anpassung des Evolutionsstrategie-Verfahrens dadurch erfolgt, daß eine Erwartungswertverschiebung für den Ursprung der Verteilungsdichtefunktion (Standardabweichung) durchgeführt wird, die einem Verschieben des Ursprungs der Verteilerdichtefunktion (Standardabweichung) für die bei der Mutation zufällig geänderten Stellgrößen entspricht.

10. Verfahren nach einem der Ansprüche 7 bis 9, **dadurch gekennzeichnet**, daß eine Anpassung des Evolutionsstrategie-Verfahrens dadurch erfolgt, daß eine Koordinatentransformation in dem n-Parameterraum zur Ausrichtung der zumindest einen skalierten Hauptachse an einen extremwert-behafteten lokalen Gradienten des in dem n-Parameterraum aufgespannten Gesamtqualitäts-Gebirge ausgerichtet wird.

11. Verfahren nach einem der Ansprüche 7 bis 10, **dadurch gekennzeichnet**, daß die Anpassung des Evolutionsstrategie-Verfahrens im Hinblick auf vorhandenes variables adaptives Prozeßwissen über die beim Einfahren oder Einrichten der Extrusionsanlage gegebene Übertragungsfunktion zwischen Stell- und Ausgangsgrößen dadurch erfolgt, daß die entsprechende Stellgröße Pi mit einer entsprechend großen Erwartungswertverschiebung verschoben und gleichzeitig die Verteilungsdichtefunktion (Standardabweichung) für diese Stellgröße Pi auf einen minimalen Wert eingestellt wird, und daß bei zunehmender Annäherung an die optimalen Stellgrößen die Erwartungswertverschiebung gegen Null und die Standardabweichung gegen einen oberen vorwählbaren Grenzwert verstellt wird.

12. Verfahren nach Anspruch 11, **dadurch gekennzeichnet**, daß zur Anpassung des Evolutionsstrategie-Verfahrens an vorhandenes variables adaptives Prozeßwissen mittels neuronaler Netze oder simulierter neuronaler Netze durchgeführt wird.

13. Verfahren nach Anspruch 11, **dadurch gekennzeichnet**, daß zur Anpassung des Evolutionsstrategie-Verfahrens an vorhandenes variables adaptives Prozeßwissen mittels statistischer Methoden durchgeführt wird.

14. Verfahren nach einem der Ansprüche 1 bis 13, **dadurch gekennzeichnet**, daß bei zunehmender Annäherung der Stellgrößen an eine optimale Stellgröße die Verteilungsdichtefunktion (Standardabweichung) auf zunehmend kleinere Werte eingestellt wird.

15. Verfahren nach einem der Ansprüche 1 bis 14, **dadurch gekennzeichnet**, daß bei einem physikalischen Prozeß mit zumindest quasi-entkoppelten Teilprozessen das Verfahren der Evolutionsstrategie auf jeden Teilprozeß separat angewandt wird.

16. Verfahren nach einem der Ansprüche 1 bis 15, **dadurch gekennzeichnet**, daß das Verfahren zur Dickenregelung an monoaxialen oder biaxialen Streckanlagen für Kunststoffolien angewandt wird.

17. Verfahren nach einem der Ansprüche 1 bis 15, **dadurch gekennzeichnet**, daß das Verfahren bei der Herstellung von Blasfolien angewandt wird.

18. Verfahren nach einem der Ansprüche 1 bis 15, **dadurch gekennzeichnet**, daß das Verfahren bei Flachfolien- oder Beschichtungsanlagen mit einem Breitschlitzwerk angewandt wird.

19. Extrusionsanlage zum Durchführen des Verfahrens nach einem der Ansprüche 1 bis 18, mit einer insbesonderen in Form einer Breitschlitz- oder Ringdüse ausgebildeten Extrusionsdüse, und mit mehreren quer zur Abzugsrichtung versetzt liegendenden lokalen Einstellzonen mit Stellgliedern, sowie mit einer Dickenmeßeinrichtung, **dadurch gekennzeichnet**, daß eine elektronische Steuerungseinrichtung vorgesehen ist, die nach einem Evolutionsstrategieverfahren zumindest eines der Ansprüche 1 bis 18 betreibbar ist, um die Optimierung der Dickenverteilung durchzuführen.

**Claims**

1. A process for producing flat and annular-cross-section extrudates by means of an extrusion system, having an extrusion nozzle embodied in particular in the form of a wide slit or ring nozzle, and having a plurality of local adjustment zones located offset from the draw-off direction, wherein the extrudate thickness is detected at positions located offset from the draw-off direction by means of a thickness gauge, and in which suitable actuators in the adjustment zones are triggered in order to attain a command thickness profile, characterized in that the optimization of the thickness distribution is carried out by minimizing the thickness deviation from the command thickness profile specified transversely to the draw-off direction by means of an evolution strategy method, in which in each case as a consequence of random changes (mutations) in the control variables in the context of a specifiable distribution density function (standard deviation), new control variables for the final control elements affecting the thickness distribution are ascertained in the local control zones, and using a preselectable suppression rule (selection), a selection of control variables that are improved in view of the specified command thickness profile is made, for triggering the final control elements in the local control zones of the extrusion system, in order to carry out the next evolution step.

2. The process of claim 1, characterized in that a suppression rule is used which represents a total quality function as a target of the specified command thickness profile as an optimum to be attained, the total quality function being composed of standardized individual qualities, each of which is formed by standardizing the physical output variables corresponding to the stated target, namely the variables of the specified thickness profile.

3. The process of claim 2, characterized in that the total quality $Q_g$ is formed by the method of weighted addition from the individual qualities $Q_i$ and the weighting factors $a_i$, where $i = 1\text{-}n$, by the formula

$$Q_g = a_1 * Q_1 + a_2 * Q_2 + ... + a_n * Q_n.$$

4. The process of claim 2, characterized in that the total quality $Q_g$ is formed from the individual qualities $Q_i$ with the weighting factors $a_i$, where $i = 1\text{-}n$, and a further constant (K) in accordance with the equation:

$$Q_g = a_1 * Q_1 * (K + a_2 * Q_2 + a_3 * Q_3 + ... a_n * Q_n).$$

5. The process of one of claims 1-4, characterized in that the distribution density function (standard deviation) and hence the step width control is varied upon each mutation as a function of the difference between the thickness distribution of the extrudate, measured crosswise to the draw-off direction, and the specified command thickness profile.

6. The process of claim 5, characterized in that as the difference between the measured thickness distribution of the extrudate and the specified command thickness crosswise to the draw-off direction decreases, the distribution density function (standard deviation) and hence the step width control is varied to smaller values.

7. The process of one of claims 1-6, characterized in that the evolution strategy method is adapted to various production conditions and/or for increasing the rate of convergence, in order to attain an optimized setting in a shorter time, specifically taking the following into account:
    - prior process knowledge in the form of a transfer function that reproduces a given dependency of the output variables on the control variables,
    and/or
    - automatically adaptive process knowledge about the transfer function between local influence on thickness and the actually measured values of the thickness distribution.

8. The process of claim 7, characterized in that the adaptation of the evolution strategy method is done in that at least one main axis direction of the distribution density function (standard deviation) is varied in an n-parameter space by scaling, i.e. by enlargement or reduction.

9. The process of claim 7 or 8, characterized in that an adaptation of the evolution strategy method is done in that an expectation value shift for the origin of the distribution density function (standard deviation) is carried out, which is equivalent to a shift in the origin of the distribution density function (standard deviation) for the control variables randomly changed in the mutation.

10. The process of one of claims 7-9, characterized in that an adaptation of the evolution strategy method is done in that a coordinate transformation in the n-parameter space is carried out for aligning the at least one scaled main axis with a local gradient, involving an extreme value, of the total quality curve system arrayed in the n-parameter space.

11. The process of one of claims 7-10, characterized in that the adaptation of the evolution strategy method with a view to existing variable adaptive process knowledge is effected via the transfer function between control variables and output variables that exists when the extrusion system is started up or set up, in that the corresponding control variable Pi is shifted with an adequately great expectation value shift, and at the same time the distribution density function (standard deviation) for this control variable Pi is set to a minimal value, and that with an increasingly close approach to the optimal control variables, the expectation value shift is adjusted toward zero and the standard deviation is adjusted toward an upper, preselectable limit value.

12. The process of claim 11, characterized in that the adaptation of the evolution strategy method to existing variable adaptive process knowledge is carried out by means of neural networks or simulated neural networks.

13. The process of claim 11, characterized in that the adaptation of the evolution strategy method to existing variable adaptive process knowledge is carried out by means of statistical methods.

14. The process of one of claims 1-13, characterized in that with increasing approach of the control variables to an optimal control variable, the distribution density function (standard deviation) is varied to increasingly smaller values.

15. The process of one of claims 1-14, characterized in that in a physical process with at least quasi-decoupled subprocesses, the method of evolution strategy is employed separately upon each subprocess.

16. The process of one of claims 1-15, characterized in that the process is employed for regulating thickness in monoaxial or biaxial drawing systems for plastic films.

17. The process of one of claims 1-15, characterized in that the process is employed in the production of blown films.

18. The process of one of claims 1-15, characterized in that the process is employed in flat-film or coating systems with a wide slit mechanism.

19. An extrusion device for carrying out the process of one of claims 1-18, having an extrusion nozzle embodied in particular in the form of a wide-slit nozzle or ring nozzle, and having a plurality of local setting zones that are offset from the draw-off direction and have actuators, and having a thickness gauge, characterized in that an electronic control unit is provided that can be operated by an evolution strategy method in accordance with at least one of claims 1-18, in order to optimize the thickness distribution.

**Revendications**

1. Procédé de fabrication d'extrudats plats et de section transversale annulaire, au moyen d'une installation d'extrusion comportant une buse d'extrusion réalisée en particulier sous la forme d'un interstice allongé ou d'une buse annulaire, et comportant plusieurs zones de réglage local décalées transversalement à la direction d'étirage, tandis que l'épaisseur de l'extrudat est détectée par un dispositif de mesure d'épaisseur en des positions décalées transversalement par rapport à la direction d'étirage, et dans lequel, en vue d'atteindre un profil de consigne des épaisseurs des organes de réglage correspondants sont commandés dans les zones de réglage, caractérisé en ce que l'optimisation de la distribution des épaisseurs, par minimisation de la déviation des épaisseurs par rapport au profil de consigne des épaisseurs prédéterminé dans la direction transversale à la direction d'étirage, est effectuée au moyen d'un procédé à stratégie évolutionniste dans lequel, suite à des modifications aléatoires (mutations) des grandeurs de réglage de nouvelles grandeurs de réglage des organes de réglage influençant la distribution d'épaisseur dans le cadre d'une fonction prédéterminable de densité de distribution (déviation standard), sont calculées dans les zones de réglage local, et qu'en tenant compte du profil prédéterminé des épaisseurs de consigne, un choix de grandeurs de réglage améliorées pour la commande des organes de réglage dans les zones de réglage local de l'installation d'extrusion, est effectué en vue de l'exécution d'une étape ultérieure d'évolution.

2. Procédé selon la revendication 1, caractérisé en ce que l'on utilise une condition obligatoire qui représente une fonction de qualité globale servant d'objectif pour le profil prédéterminé des épaisseurs de consigne comme un optimum à atteindre, la fonction de qualité globale étant constituée de l'assemblage de qualités individuelles normalisées qui sont formées chacune par normalisation de grandeurs physiques de sortie correspondant à l'objectif, à savoir du profil prédéterminé des épaisseurs.

3. Procédé selon la revendication 2, caractérisé en ce que la qualité globale $Q_g$ est formée selon la méthode de la sommation pondérée des qualités individuelles $Q_i$ et des coefficients de pondération $a_i$, avec $i = 1$ à $n$ suivant la formule:

$$Q_g = a_1{}^*Q_1 + a_2{}^*Q_2 + ... + a_n{}^*Q_n.$$

4. Procédé selon la revendication 2, caractérisé en ce que la qualité globale $Q_g$ est formée à partir des qualités individuelles $Q_i$ avec les coefficients de pondération $a_i$, avec $i = 1$ à $n$, et une autre constante K, suivant l'équation:

$$Q_g = a_1{}^*Q_1{}^*(K + a_2{}^*Q_2 + a_3{}^*Q_3 + ... a_n{}^*Q_n).$$

5. Procédé selon l'une des revendication 1 à 4, caractérisé en ce que la fonction de densité de distribution (déviation standard) et donc la commande des incréments de chaque mutation est modifiée en fonction de la différence entre la distribution des épaisseurs de l'extrudat, mesurées transversalement par rapport à la direction d'étirage, et le profil prédéterminé des épaisseurs de consigne.

6. Procédé selon la revendication 5, caractérisé en ce que lorsque la différence entre la distribution mesurée des épaisseurs de l'extrudat et le profil prédéterminé des épaisseurs de consigne dans la direction transversale à la direction d'étirage diminuent, la fonction de densité de distribution (déviation standard) et donc la commande des incréments est modifiée dans le sens de plus petites valeurs.

7. Procédé selon l'une quelconque des revendications 1 à 6, caractérisé en ce que le procédé à stratégie évolutionniste s'adapte en un temps court à différentes conditions de production et/ou en vue de l'augmentation de la vitesse de convergence, pour atteindre un réglage optimisé, et ce en tenant compte:

   - de connaissances préalables sur le processus, sous la forme d'une fonction de transfert fournissant une dépendance donnée des grandeurs de sortie vis-à-vis des grandeurs de réglage,

   et/ou

   - d'une connaissance adaptative automatique du processus concernant la fonction de transfert entre l'influence sur l'épaisseur locale et les valeurs de mesure effectivement mesurées de la distribution des épaisseurs.

8. Procédé selon la revendication 7, caractérisé en ce que l'adaptation du procédé à stratégie évolutionniste s'effectue en ce qu'au moins un axe principal de la fonction de densité de distribution (déviation standard) est modifié par mise à l'échelle, c'est-à-dire agrandissement ou diminution, dans un espace à n paramètres.

9. Procédé selon la revendication 7 ou 8, caractérisé en ce qu'une adaptation du procédé à stratégie évolutionniste s'effectue en réalisant un décalage de la valeur d'espérance à l'origine de la fonction de densité de distribution (déviation standard), qui correspond à un déplacement de l'origine de la fonction de densité de distribution (déviation standard) pour les grandeurs de réglage modifiées aléatoirement par la mutation.

10. Procédé selon l'une quelconque des revendications 7 à 9, caractérisé en ce qu'une adaptation du procédé à stratégie évolutionniste s'effectue par orientation d'une transformation de coordonnées dans l'espace à n paramètres, en vue d'orienter l'axe principal mis à l'échelle au moins présent sur un gradient local, atteignant un extremum, du pic de qualité totale s'étendant dans l'espace à n paramètres.

11. Procédé selon l'une quelconque des revendications 7 à 10, caractérisé en ce que l'adaptation du procédé à stratégie évolutionniste s'effectue en tenant compte d'une connaissance adaptative variable existante du processus, par l'intermédiaire de la fonction de transfert entre les grandeurs de réglage et les grandeurs de sortie données pour la mise en route ou l'ajustement de l'installation d'extrusion, en ce que la grandeur de réglage correspondante Pi est décalée d'un décalage de la valeur d'espérance de grandeur correspondante, et en ce que simultanément, la fonction de densité de distribution (déviation standard) de cette grandeur de réglage Pi est réglée à une valeur minimale, et en ce que lorsque l'on s'approche plus près des grandeurs de réglage optimales, le décalage de la valeur d'espérance est ajusté vers zéro et la déviation standard est ajustée vers une valeur limite supérieure pré-sélectionnable.

12. Procédé selon la revendication 11, caractérisé en ce que pour adapter le procédé à stratégie évolutionniste à des connaissances adaptatives variables existantes du processus, on travaille au moyen de réseaux neuronaux ou de réseaux neuronaux simulés.

13. Procédé selon la revendication 11, caractérisé en ce que pour l'adaptation du procédé à stratégie évolutionniste à des connaissances adaptatives variables présentes du processus, on travaille au moyen de méthodes statistiques.

14. Procédé selon l'une quelconque des revendications 1 à 13, caractérisé en ce que lorsque les grandeurs de réglage s'approchent plus étroitement d'une grandeur de réglage optimale, la fonction de densité de distribution (déviation standard) est ajustée à des valeurs de plus en plus petites.

15. Procédé selon l'une quelconque des revendications 1 à 14, caractérisé en ce que pour un processus physique comportant des processus partiels au moins quasi découplés, le procédé à stratégie évolutionniste est utilisé séparément sur chaque processus partiel.

16. Procédé selon l'une quelconque des revendications 1 à 15, caractérisé en ce que le procédé de régulation d'épaisseur est utilisé sur des installations d'étirage monoaxial ou biaxial de feuilles en matière synthétique.

17. Procédé selon l'une quelconque des revendications 1 à 15, caractérisé en ce que le procédé est utilisé pour la fabrication de feuilles soufflées.

18. Procédé selon l'une quelconque des revendications 1 à 15, caractérisé en ce que le procédé est utilisé sur des installations à feuilles minces ou de recouvrement comportant un outil à interstice allongé.

19. Installation d'extrusion en vue de l'exécution des procédés selon l'une quelconque des revendications 1 à 18, comportant une buse d'extrusion configurée en particulier sous la forme d'un interstice allongé ou d'une buse annulaire, et comportant plusieurs zones de réglage local décalées transversalement par rapport à la direction d'étirage, avec organes de réglage, comportant également un dispositif de mesure d'épaisseur, caractérisée en ce qu'il est prévu un dispositif électronique de commande qui peut être exploité selon un procédé à stratégie évolutionniste selon au moins l'une quelconque des revendications 1 à 18, pour effectuer l'optimisation de la distribu-

tion des épaisseurs.

Fig. 1

Fig. 2

Fig. 3

$x_0$ ○ —— $W_0$ ——▶

$x_1$ ○ —— $W_1$ ——▶ │ Zelle │ —— $y$ ——▶

$x_{n-1}$ ○ —— $W_{n-1}$ ——▶

$e_0$ ——▶ ○
$e_1$ ——▶ ○
$e_2$ ——▶ ○

$e_{n-1}$ ——▶ ○

**Fig. 4**

Bestimmung der Qualitäten
↓
Bestimmung der Stellgrößen

Definitionsbereich der Stellgröße

Startwerte

Maßstabsfaktoren
↓
Abbruchkriterien
↓
Startschrittweite

Konvergenzbeschleunigung

• Erwartungswert – verschiebung

• Maßstabsanpassung

Vorversuche zur Bestimmung der Prozeßzusammenhänge und Wichtigkeitsfaktoren
↓
Einzelqualitätsfunktionen
↓
Gesamtqualitätsfunktion

**Fig. 5**

Fig. 6

Fig. 7a

Fig. 7b

Fig. 9

Fig. 8

Ziel vorgabe : konstante Foliendicke

Solltemperatur

Optimierer

Dickenprofil

Temperatur- regelung

Foliendicken- messung

Werkzeugbolzen- temperatur

KV – Prozeß biaxiale Folienreckanlage

Fig.10

Schrittweite

Qualität

Schrittweite, Qualität (2-Sigma)

Schritte

Schrittweite
Elterqualität
Nachkom- menqualität

Fig. 11

Schritt- weite

Qualität

Schrittweite, Qualität (2-Sigma)

Anzahl der Optimierschritte

Schrittweite
Elterqualität
Nachkom- menqualität

Fig. 12